# EUROPEAN PATENT APPLICATION

(11) **EP 2 808 303 A1**
(43) Date of publication of application: **03.12.2014**
(21) Application number: 12866480.2
(22) Date of filing: 21.12.2012
(51) Int. Cl.: C01G 53/00, B01D 9/02, H01M 4/505, H01M 4/525

(54) **METHOD FOR MANUFACTURING METALLIC AGGLOMERATED PARTICLES, METHOD FOR MANUFACTURING POSITIVE-ELECTRODE ACTIVE MATERIAL FOR LITHIUM ION BATTERY, METHOD FOR MANUFACTURING LITHIUM ION BATTERY, AND LITHIUM ION BATTERY**

(30) Priority: 24.01.2012 JP 2012012417
(71) Applicant: Tsukishima Kikai Co., Ltd., Tokyo 104-0051 (JP)
(72) Inventor: DOYA, Yo, Tokyo 104-0051 (JP); GOTO, Hidenori, Tokyo 104-0051 (JP)
(74) Representative: Williams Powell
(86) International application number: PCT/JP2012/083245
(87) International publication number: WO 2013/111487

(57) **Abstract**

To obtain metal agglomerate having stable particle sizes and substantially spherical shapes, the method allows, by a circulation unit, a flow of a liquid containing metal to pass through a processing vessel and an external circulation path, and a part of the liquid from the processing vessel to be extracted to an outside in a substantially continuous manner so as to return to the processing vessel after it goes through the external circulation path, sets a flow velocity in the external circulation path to be 1 m/second or more, and injects at least a part of a liquid concentrate containing a reactant to be newly added into the external circulation path.

## Description

### Technical Field

The present invention relates to a method of manufacturing metal agglomerate, a method of manufacturing a lithium ion battery cathode active material, a method of manufacturing lithium ion, and a lithium ion battery.

### Background Art

A lithium ion battery cathode active material is typically expressed by
a compositional formula: Li_{X}Ni_{1-y}M_{y}O₂₊α ... (1)
(in the formula, M is one or more selected from Sc, Ti, V, Cr, Mn, Fe, Co, Cu, Zn, Ga, Ge, Al, Bi, Sn, Mg, Ca, B, and Zr, 0.9 < x ≤ 1.2, 0 < y ≤ 0.7, and α > 0.1).
In addition to the above formula, there is
a compositional formula: Li (LiₓNi_{1-x-y}M_{y})O₂₊α ... (2)
(in the formula, M is one or more selected from Sc, Ti, V, Cr, Mn, Fe, Co, Cu, Zn, Ga, Ge, Al, Bi, Sn, Mg, Ca, B, and Zr, 0 ≤ x ≤ 0.1, 0 < y ≤ 0.7, and α > 0).

For example, a nickel salt, a cobalt salt, and a manganese salt are reacted as a material with a sodium hydroxide or an ammonium carbonate, and a nickel hydroxide or a manganese carbonate is obtained. The nickel hydroxide or the manganese carbonate is mixed and calcined with lithium (a lithium hydroxide), and a lithium/nickel/manganese-based cathode active material is obtained.

In this sort of case, a method is employed in which a nickel salt solution and a manganese salt solution are injected into a stirred reactor, and a Ni-Mn composite hydroxide or carbonate is precipitated.

### Citation List

### Patent Literatures

Patent Literature 1: JP 2006-228604 A
Patent Literature 2: JP 8-315822 A

### Summary of Invention

### Technical Problem

However, in a conventional case in which metal agglomerate is obtained using precipitation in a stirred reactor, the particle size tends to become larger with the lapse of a reaction time, and variation of the particle size becomes large after the lapse of a certain time, as a first problem. Therefore, particles having small and stable particle sizes cannot be obtained.

A second problem is that the shapes of the obtained particles are not always spherical, and when the particles are used as a lithium ion battery cathode active material, high performance cannot be expected.

A third problem is that, practically, batch type processing is employed, and thus a large processing amount per time cannot be expected. When it is desired to increase the processing amount, investment cost to a large facility is increased.

Therefore, a principal objective of the present invention is to provide embodiments capable of obtaining metal agglomerate having stable particle sizes, obtaining metal agglomerate having substantially spherical shapes, and obtaining a large processing amount per unit time with a small facility without increasing the facility in size. Solution to Problem

The present invention that has solved the problems is as follows.

### [Invention according to claim 1]

A method of manufacturing metal agglomerate comprising:
allowing, by a circulation unit, a flow of a liquid containing metal to pass through a processing vessel and an external circulation path, and a part of the liquid from the processing vessel to be extracted to an outside in a substantially continuous manner so as to return to the processing vessel after it goes through the external circulation path,
setting a flow velocity in the external circulation path to be 1 m/second or more, and
injecting at least a part of a liquid concentrate containing a reactant to be newly added into the external circulation path.

### (Principal Operation and Effect)

The circulation unit is included that extracts the part of the liquid from the processing vessel to the outside in a substantially continuous manner so as to return to the processing vessel after it goes through the external circulation path, and the flow velocity in the external circulation path is set to be 1 m/second or more.

Therefore, the reaction can be sufficiently performed in the external circulation path, and a processing amount can be surely larger than a conventional case in which the precipitation is waited in a stirred reactor.

In this case, the processing vessel has a role as a distributor that receives a reaction processing liquid sent to/returned from the external circulation path, and extracts a product liquid in which the reaction has been completed.

### [Invention according to claim 2]

The method of manufacturing metal agglomerate according to claim 1, wherein an extraction portion of the liquid from the processing vessel to the external circulation path and an extraction portion of a product liquid are located in different positions.

### (Principal Operation and Effect)

When the extraction portion of the liquid to the external circulation path and the extraction portion of the product liquid are located in different positions, a form in which the flows of the liquids do not interfere with each other is employed.

### [Invention according to claim 3]

The method of manufacturing metal agglomerate according to claim 2, wherein the product liquid is discharged from the processing vessel at a portion lower than the extraction portion of the liquid from the processing vessel to the external circulation path.

### (Principal Operation and Effect)

When a material having high sedimentary is processed in the processing vessel, the sedimentary product can be surely discharged.

### [Invention according to claim 4]

The method of manufacturing metal agglomerate according to claim 1, wherein the external circulation path includes a circulation pump.

### (Principal Operation and Effect)

The liquid is forcibly circulated by the circulation pump, and thus reaction can be surely executed in the process. Further, when the capacity of the circulation pump is determined according to a length or a cross section of the external circulation path, the reaction can be completed by one time circulation of the reaction liquid in the external circulation path for example.

### [Invention according to claim 5]

The method of manufacturing metal agglomerate according to claim 1, wherein a flow velocity control unit including a circulation pump is provided in the external circulation path.

### Manufacturing method

### (Principal Operation and Effect)

By control of the speed of rotation or the flow rate of the circulation pump or the flow velocity adjustment valve, the reaction can be completed by one time circulation of the reaction liquid in the external circulation path for example, and the reaction can be surely performed so as to be corresponding to the change of properties of the liquid.

### [Invention according to claim 6]

The method of manufacturing metal agglomerate according to claim 1, wherein the liquid concentrate containing a reactant is added in the external circulation path at a subsequent stage of a circulation pump.

### (Principal Operation and Effect)

When the liquid concentrate containing the reactant is injected into an injection side at the subsequent stage of the circulation pump, the liquid concentrate containing the reactant is injected into a portion where an injection flow rate is stable, and thus the stability of reaction becomes high.

### [Invention according to claim 7]

The method of manufacturing metal agglomerate according to claim 1, wherein a first liquid concentrate containing a reactant is injected into the external circulation path at a preceding stage of a circulation pump, and a second liquid concentrate containing a reactant is added in the external circulation path at a subsequent stage of the circulation pump.

### (Principal Operation and Effect)

When various liquid concentrates are handled, a form may sometimes be effective in which the injection portions are located differently with respect to the circulation pump.

### [Invention according to claim 8]

The method of manufacturing metal agglomerate according to claim 1, wherein each of a first liquid concentrate containing a reactant and a second liquid concentrate containing a reactant is injected into the external circulation path at a subsequent stage of a circulation pump.

### (Principal Operation and Effect)

When various liquid concentrates are handled, a form in which the injection portions are located at the subsequent stage of the circulation pump may sometimes be effective.

### [Invention according to claim 9]

The method of manufacturing metal agglomerate according to claim 1, wherein the external circulation path is branched into a plurality of branch paths at a subsequent stage of a circulation pump, and the liquid that has passed through the plurality of branch paths is sent to the processing vessel.

### (Principal Operation and Effect)

When the external circulation path is branched into the plurality of branch paths, and the liquid that has passed through the plurality of branch paths is sent to the processing vessel, the reaction processing amount can be increased.

### [Invention according to claim 10]

The method of manufacturing metal agglomerate according to claim 9, wherein outlets of the branch paths face the reaction processing liquid in the processing vessel while the plurality of branch paths are remained in a branch state.

### (Principal Operation and Effect)

While it is not possible to collect the outlets of the branch paths so that the branch paths are returned to the processing vessel, this makes a pressure loss large. According to the present embodiment, the branch paths can be returned to the processing vessel without causing an increase in the pressure loss.

### [Invention according to claim 11]

The method of manufacturing metal agglomerate according to claim 1, wherein the external circulation path includes a circulation pump, and an enhancement path is provided at a subsequent stage of the circulation pump.

### (Principal Operation and Effect)

By providing of the enhancement path, the reaction processing amount can be increased.

### [Invention according to claim 12]

The method of manufacturing metal agglomerate according to claim 1, wherein the external circulation path includes a circulation pump, and is branched into a plurality of branch paths at a subsequent stage of the circulation pump, an enhancement path is provided in at least one of the plurality of branch paths, and the liquid that has passed through the branch paths is sent to the processing vessel.

### (Principal Operation and Effect)

By the branching to the plurality of branch paths, and the installation of the enhancement path, a significant increase in the reaction processing amount can be achieved. In this case, each of the outlets of the branch paths after having passed the enhancement path faces the reaction processing liquid in the processing vessel while the branch paths are remained in a branch state, and the branch paths after having passed through the enhancement path can face an inside of the processing vessel as a single return path after having been collected in a collecting outlet header.

### [Invention according to claim 13]

The method of manufacturing metal agglomerate according to claim 1, wherein a Reynolds number of the external circulation path is 5000 or more, and a reaction passage having an average flow velocity of 1 m/second or more is formed by 3 m or more.

### (Principal Operation and Effect)

In the reaction passage in which an average flow velocity is 1 m/second or more, the reactivity is high when it is in a turbulent flow state where the Reynolds number is 5000 or more. Further, when at least the 3 m or more reaction passage having the average flow velocity of 1 m/second or more is included, a reaction time can be sufficiently secured.

### [Invention according to claim 14]

The method of manufacturing metal agglomerate according to claim 1, wherein a mechanical unit that fluidizes a reaction liquid is not provided in the processing vessel, and reaction is mainly performed in a circulation process of the external circulation path.

### (Principal Operation and Effect)

When the reaction is mainly performed in the circulation process in the external circulation path, generation of too-large particles is prevented, and particles having uniform and small diameters (particle size distribution is sharp) can be obtained.

### [Invention according to claim 15]

The method of manufacturing metal agglomerate according to claim 1, wherein a product liquid is discharged from the processing vessel to an outside.

### (Principal Operation and Effect)

It can be considered that the product liquid is discharged from the external circulation path. However, in that case, reaction in the external circulation path is influenced, and thus it is desirable to discharge the product liquid from the processing vessel to the outside.

### [Invention according to claim 16]

The method of manufacturing metal agglomerate according to claim 15, wherein the mechanical unit that fluidizes the product liquid is provided in a vicinity of an exhaust port through which the product liquid is discharged from the processing vessel to the outside.

### (Principal Operation and Effect)

When a material having high sedimentary is handled, the product liquid can be fluidized by the mechanical unit, and the product liquid after reaction can be surely separated and discharged.

### [Invention according to claim 17]

A method of manufacturing a lithium ion battery cathode active material, the method using metal agglomerate obtained by the manufacturing methods according to claims 1 to 16 for a lithium ion battery cathode active material.

### (Principal Operation and Effect)

When the obtained metal agglomerate having small and uniform particle sizes and excellent spherical shapes are used for the lithium ion battery cathode active material, a characteristic as the cathode can be improved.

### [Invention according to claim 18]

A method of manufacturing a lithium ion battery containing a lithium ion battery cathode active material, the method using metal agglomerate obtained by the manufacturing methods according to claims 1 to 16.

### [Invention according to claim 19]

A lithium ion battery containing a lithium ion battery cathode active material using metal agglomerate obtained by the manufacturing methods according to claims 1 to 16. Advantageous Effects of Invention

According to the present invention, metal agglomerate having stable particle sizes can be obtained, metal agglomerate having substantially spherical shapes can be obtained, and a large processing amount per unit time can be obtained with a small facility without increasing the facility in size.

### Brief Description of Drawings

Fig. 1 is a schematic diagram of a conventional example.
Fig. 2 is a schematic diagram of an example of the present invention.
Fig. 3 is a schematic diagram of an example of the present invention.
Fig. 4 is a schematic diagram of an example of the present invention.
Fig. 5 is a schematic diagram of an example of the present invention.
Fig. 6 is a schematic diagram of an example of the present invention.
Fig. 7 is a schematic diagram of an example of the present invention.
Fig. 8 is a schematic diagram of an example of the present invention.
Fig. 9 is a schematic diagram of an example of the present invention.
Fig. 10 is a schematic diagram of an example of the present invention.
Fig. 11 is a schematic diagram of an example of the present invention.
Fig. 12 is a schematic diagram of an example of the present invention.
Fig. 13 is variation graphs of particle sizes of Example 1.
Fig. 14 is a SEM photograph of particles of Example 1.
Fig. 15 is a SEM photograph of the particles of Example 1.
Fig. 16 is a SEM photograph of the particles of Example 1.
Fig. 17 is variation graphs of particle sizes of Comparative example 1.
Fig. 18 is a SEM photograph of the particles of Comparative example 1.
Fig. 19 is a SEM photograph of the particles of Comparative example 1.
Fig. 20 is a SEM photograph of the particles of Comparative example 1.
Fig. 21 is variation graphs of particle sizes of Example 2.
Fig. 22 is a SEM photograph of the particles of Example 2.
Fig. 23 is a SEM photograph of the particles of Example 2.
Fig. 24 is a SEM photograph of the particles of Example 2.
Fig. 25 is particle size variation graphs of Comparative example 2.
Fig. 26 is a SEM photograph of the particles of Comparative example 2.
Fig. 27 is a SEM photograph of the particles of Comparative example 2.
Fig. 28 is a SEM photograph of the particles of Comparative example 2.
Fig. 29 is a SEM photograph of particles of Reference example.
Fig. 30 is graphs illustrating a grain size distribution example of Comparative example 3.
Fig. 31 is graphs illustrating a grain size distribution example of Example 3.

### Description of Embodiments

Next, embodiments for implementing the present invention will be described.

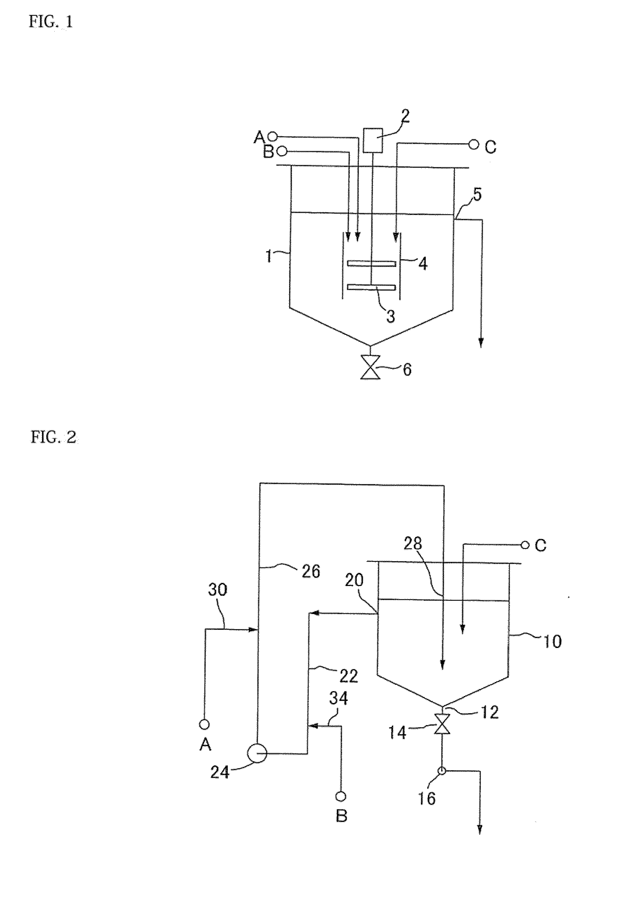

Fig. 1 illustrates a conventional example, in which a liquid concentrate A containing a reactant, a liquid concentrate B containing a reactant, and a gas C are added in a stirred reactor 1 and are stirred with a mixing blade 3 with a stirring motor 2, agglomeration/precipitation of particles are facilitated, a product liquid is extracted through a discharge outlet 5 at an appropriate timing, and precursor particles are then obtained by filtration, washing, and drying, for example.

The obtained metal agglomerate is mixed with lithium (for example, lithium hydroxide), subjected to calcination, cracking, and classification processes, and can be used as a lithium ion battery cathode active material.

Fig. 2 illustrates an example of the present invention, and includes a circulation unit, which allows a flow of a liquid containing metal to pass through a processing vessel 10 and external circulation paths 20, 22, 26, and 28, and a part of the liquid from the processing vessel 10 to be substantially and continuously extracted through an extraction port 20 to an outside so as to return to the processing vessel 10 after it goes through a suction-side path 22, a discharge-side path 26 and a return path 28.

The flow velocity in the external circulation paths 20, 22, 26, and 28 is 1 m/second or more, and
at least parts of the liquid concentrate A containing a reactant and the liquid concentrate B containing a reactant to be newly added are injected into the external circulation paths 22 and 26. Reference symbol C indicates an injection path of a gas, and when a reaction system needs to be turned into a reducing atmosphere, an inert gas, such as a nitrogen gas or a carbon dioxide gas, is injected thereto. The position of the injection path C of a gas may be located in the processing vessel 10, or may be located in the external circulation paths 20, 22, 26, or 28.

An extraction port 12 for a product liquid, an extraction valve 14, and an extraction pump 16 are illustrated.

As described above, the flow velocity in the external circulation paths 20, 22, 26, and 28 is 1 m/second or more. Therefore, reaction can be sufficiently performed in the external circulation paths 22 and 26, and the processing amount can be surely larger than a conventional case in which the precipitation is waited in the stirred reactor.

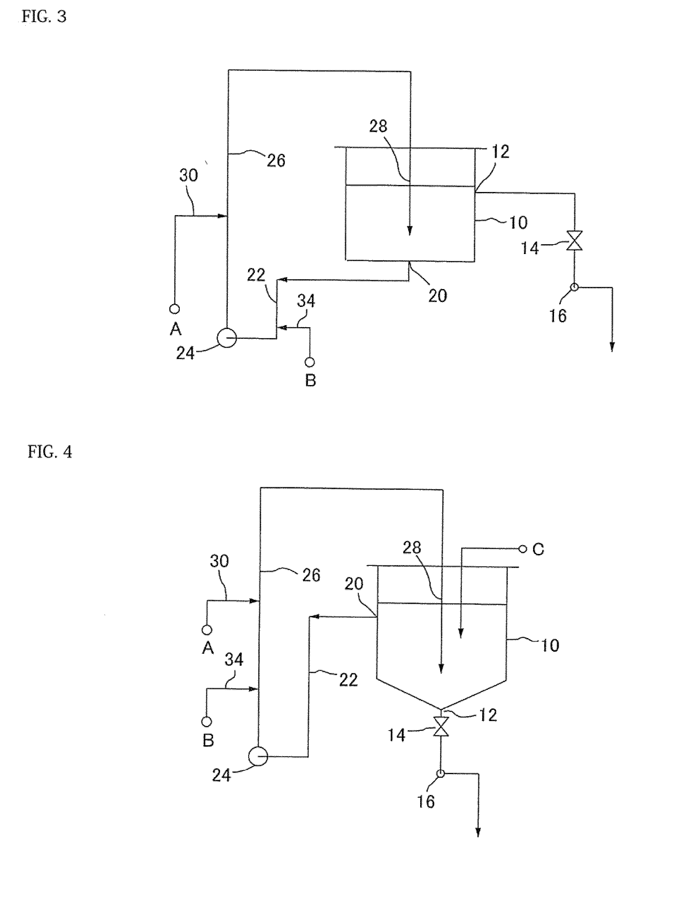

Fig. 3 also illustrates an example of the present invention, in which the position of the extraction portion 20 for a liquid from the processing vessel 10 to the external circulation paths 22, 26, and 28 can be appropriately selected, and it is desirable that the position of the extraction portion 20 is different from the position of the extraction port 12 for a product liquid.

As shown in Fig. 2, the product liquid can be discharged from the processing vessel 10 through a portion lower than the extraction portion 20 for the liquid to the external circulation paths 22, 26, and 28, or can be discharged through a portion upper than the extraction portion 20.

In either case, when the extraction portion for the liquid to the external circulation paths 20, 22, 26, and 28, and the extraction portion for the product liquid are located in different positions, flows of the liquids do not interfere with each other.

Fig. 4 also illustrates an example of the present invention, and it is favorable to provide a circulation pump 24 in the external circulation paths 20, 22, 26, and 28.

The liquid is forcibly circulated by the circulation pump 24, and thus reaction can be surely executed in the process. Further, when the capacity of the circulation pump is determined according to lengths or cross sections of the external circulation paths 20, 22, 26, and 28, the reaction can be completed by one time circulation of a reaction liquid in the external circulation paths 20, 22, 26, and 28, for example.

While not illustrated, a flow velocity control unit including the circulation pump 24 can be provided in the external circulation paths 20, 22, 26, and 28.

By control of a speed of rotation or a flow rate of the circulation pump 24 or a flow velocity adjustment valve, reaction can be completed by one time circulation of the reaction liquid in the external circulation paths 20, 22, 26, and 28 for example, and the reaction can be surely performed so as to be corresponding to a change of properties of the liquid.

As shown in Fig. 4, the liquid concentrate A containing a reactant and/or the liquid concentrate B containing a reactant can be added to the external circulation path 26 in the subsequent stage of the circulation pump 24.

When the liquid concentrate containing the reactant is injected into a discharge side at the subsequent stage of the circulation pump 24, the liquid concentrate containing the reactant is injected into a place where the delivery flow rate is stable resulting in high stability of the reaction.

Fig. 4 illustrates an example in which the first liquid concentrate B containing the reactant and the second liquid concentrate A containing the reactant are respectively added to the external circulation path 26 at the subsequent stages of the circulation pump 24.

Meanwhile, as illustrated in Figs. 2 and 3, the first liquid concentrate B containing the reactant can be added to the external circulation path 22 at the preceding stage of the circulation pump 24, and the second liquid concentrate A containing the reactant can be added to the external circulation path 26 at the subsequent stage of the circulation pump 24, respectively so that the adding portions are located differently.

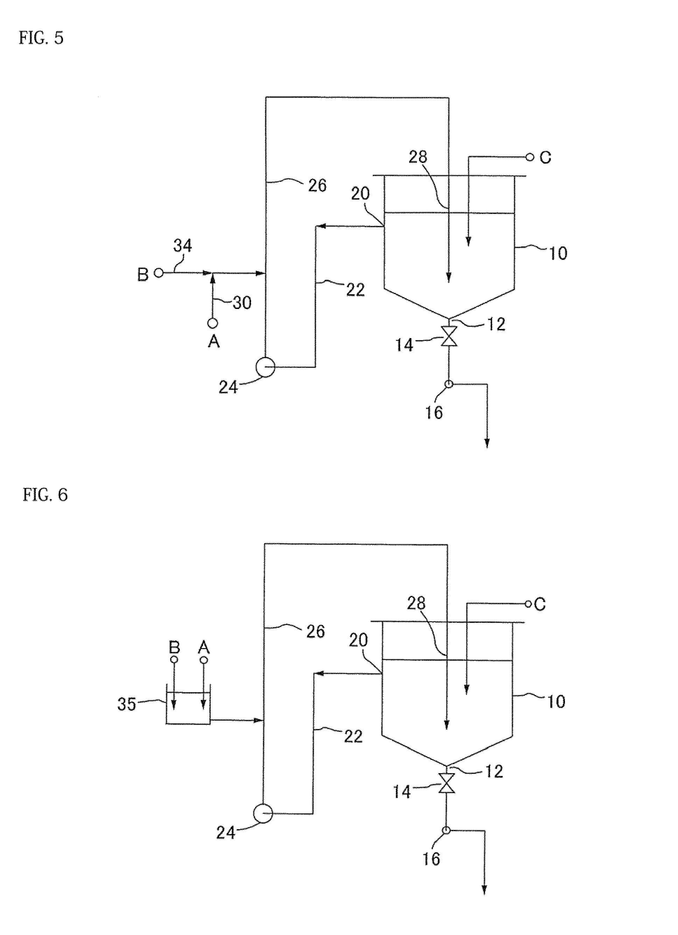

Other than the case in which the first liquid concentrate B containing the reactant and the second liquid concentrate A containing the reactant are separately injected into the external circulation paths, the first liquid concentrate B containing the reactant and the second liquid concentrate A containing the reactant can be merged and then a confluence liquid can be injected into the external circulation path, as illustrated in Fig. 5.

Further, as illustrated in Fig. 6, the confluence liquid can be injected into the external circulation path after the amount of ingredient is adjusted in an adjustment vessel 35, and the like.

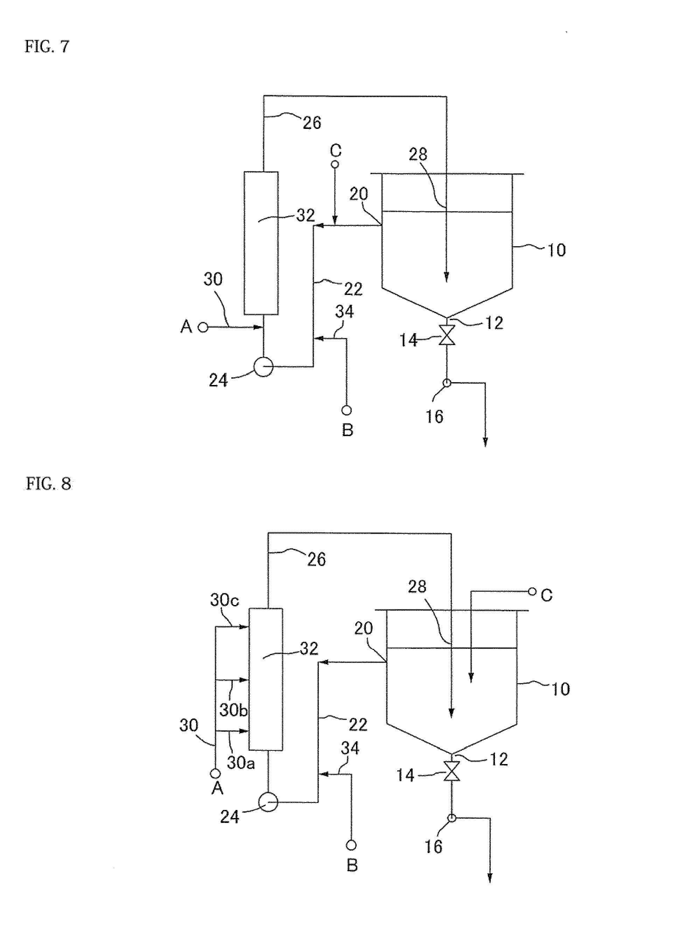

As illustrated in Fig. 7, an enhancement path 32 can be provided in the external circulation path 22 and/or the external circulation path 26. In this case, it is desirable to provide the enhancement path 32 at the subsequent stage of the circulation pump 24.

By providing the enhancement path 32, the reaction processing amount can be increased. While depending on the concentration of the reactant, the amount of the circulating liquid is favorably more than five times larger than that of the liquid concentrate containing the reactant.

Further, while depending on the type of the reactant, the amount of the circulating liquid that passes through the external circulation paths 20, 22, 26, and 28 can be 5 to 150 times, normally, 10 to 100 times larger than that of the product liquid extracted from the processing vessel 10.

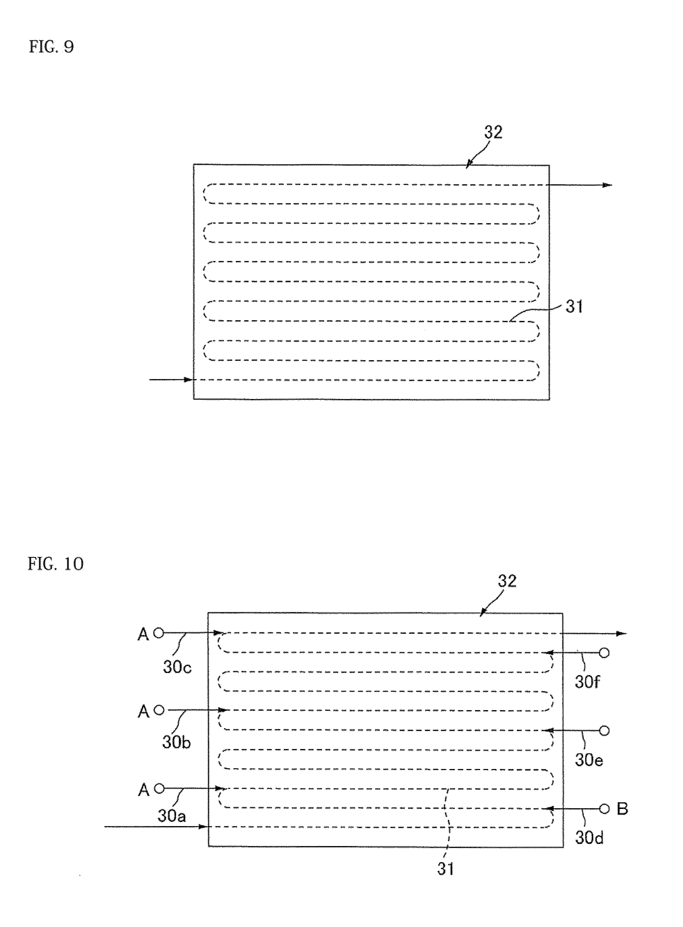

The enhancement path 32 is configured such that a bypass circuit 31 is provided on a plate body, as illustrated in Fig. 9, for example, and the entire length of the bypass circuit 31 can be much longer than that of the plate body (the lateral length in Fig. 9).

When employing the enhancement paths 32, the second liquid concentrate A containing the reactant is continuously reacted with the circulating liquid in the bypass circuit 31 in the example of Fig. 7. However, as illustrated in Figs. 8 and 10, when the injection portions of the second liquid concentrate A containing the reactant are located differently at injection ports 30a to 30c, and the injection portions of the first liquid concentrate B containing the reactant are located differently at injection ports 30d to 30f, the fresh first liquid concentrate A containing the reactant is injected into the second liquid concentrate B containing the reactant, and therefore the reaction can sometimes be favorably performed.

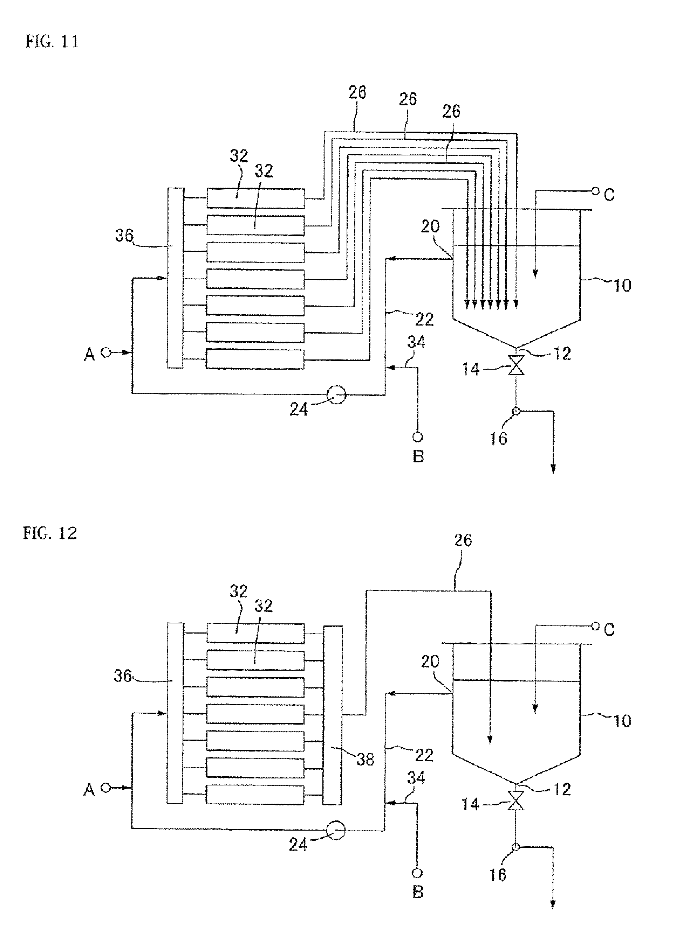

As illustrated in Fig. 11, the external circulation path 22 is branched into a plurality of branch paths 26, 26 ·· at the subsequent stage of the circulation pump 24, and the liquid having passed through the plurality of branch paths can be sent to the processing vessel 10. When the external circulation path is branched into the plurality of branch paths 26, 26··, and the liquid having passed through the plurality of branch paths 26, 26 ·· is sent to the processing vessel 10, the reaction processing amount can be increased.

Each of outlets of the branch path 26, 26 · · can face the reaction processing liquid in the processing vessel 10 while the plurality of branch paths 26, 26 · · are remained in a branch state.

While it is not possible to collect the outlets of the branch paths so that the branch paths can be returned to the processing vessel 10, this makes a pressure loss large. According to the present embodiment, the branch paths can be returned to the processing vessel 10 without causing an increase in the pressure loss.

As illustrated in Fig. 11, it is possible to be configured such that the external circulation paths includes the circulation pump 24 and is branched into the plurality of branch paths 26, 26 · · at the subsequent stage of the circulation pump 24, the enhancement path 32 is provided in at least one of the plurality of branch paths 26, 26··, and the liquid that has passed through each of the branch paths 26, 26 · · is sent into the processing vessel 10.

By the branching to the plurality of branch paths 26, 26··, and the installation of the enhancement path 32, a significant increase in the reaction processing amount can be achieved.

It is desirable to provide an inlet header 36 for a uniformed pressure of the second liquid concentrate A containing a reactant to be sent to each of the enhancement paths 32, 32 · ·, in front of the enhancement paths 32, 32 · ·.

Further, as illustrated in the example of Fig. 11, the outlets of the branch paths 26, 26 · · that have passed through the enhancement paths 32, 32··face the reaction processing liquid in the processing vessel 10 while the branch paths are remained in a branch state. Further, as illustrated in Fig. 12, the branch paths 26, 26 ·· that have passed through the enhancement paths 32, 32 ··are collected in a collecting outlet header 38, and then, can face the processing vessel 10 as a single return path.

In the present invention, it is favorable that the Reynolds number of the external circulation paths 20, 22, 26, and 28 is 5000 or more, and a section where an average flow velocity is 1 m/second or more is formed by at least 1 m or more, especially, 3 m or more. It is desirable that an upper limit of a reaction passage is about 15 m and it is more desirable that the reaction passage is 10 m or more, in terms of a load or a capacity of the circulation pump 24.

It is desirable that a mechanical unit that fluidizes the reaction liquid is not provided in the processing vessel 10, instead reaction is mainly performed in the circulation process via the external circulation paths 20, 22, 26, and 28.

When the reaction is mainly performed in the circulation process via the external circulation paths 20, 22, 26, and 28, generation of too-large particles can be prevented, and uniform particles having small sizes (with sharp particle size distribution) can be obtained.

It can be considered that the product liquid is discharged from the external circulation paths 20, 22, 26, and 28. However, in such case, the reaction performed in the external circulation paths 20, 22, 26, and 28 is influenced, and thus it is desirable to discharge the product liquid from the processing vessel 10 to the outside.

A mechanical unit that fluidizes the product liquid, for example, a mixing blade can be provided in the vicinity of an exhaust port through which the product liquid is discharged from the processing vessel 10 to the outside.

When a material having high sedimentary is handled, the product liquid is fluidized by the mechanical unit, and the product liquid after the reaction can be surely separated and discharged.

A lithium ion battery cathode active material can be manufactured using the metal agglomerate obtained by the manufacturing method of the present invention for the lithium ion battery cathode active material, and further, a lithium ion battery can be obtained.

When the obtained metal agglomerate having small and uniform particle sizes and excellent spherical shapes are used for a lithium ion battery cathode active material, the specific characteristics of cathode can be improved. Examples

Next, by way of examples and comparative examples, the effects of the present invention will be clearly shown.

### (Example 1) Example of nickel manganese carbonate

An experiment was performed with the device configured so as to include the enhancement path 32 as illustrated in Fig. 7.

As the reactant A, 1.6 M liquid obtained such that nickel sulfate and manganese sulfate are mixed at a ratio of 1 : 2 was used. As the reactant B, ammonium bicarbonate of 15% concentration, and as the reactant C, ammonia water of 25% concentration were used. To advance predetermined reaction, it is common that solvent adjustment is performed to the reactant A by addition of ammonium sulfate, hydrogen peroxide water, ethanol, glycerin, or the like and in this example, 0.1 M of ammonium sulfate was added. The reactant A was injected into the preceding stage of the circulation pump 24.

The reactant B and the reactant C were injected into the enhancement path 32 at the subsequent stage of the circulation pump 24.

A start mother liquor prepared such that 300 g of ammonia water is added to 6 kg of ion exchange water was used.

A transfer pump 24 was operated at 20 L/min, about 50 g/min of the reactant A, about 50 g/min of the reactant B, and about 5 g/min of the reactant C were injected. Further, 100 ml/min of CO2 gas was injected before or after the circulation pump 24 (N2 gas may alternatively be used).

The device system was operated where the capacity of the device system is 6 L. The same amount of the product liquid as that of the injected reactant was discharged by a pump below the processing vessel 10.

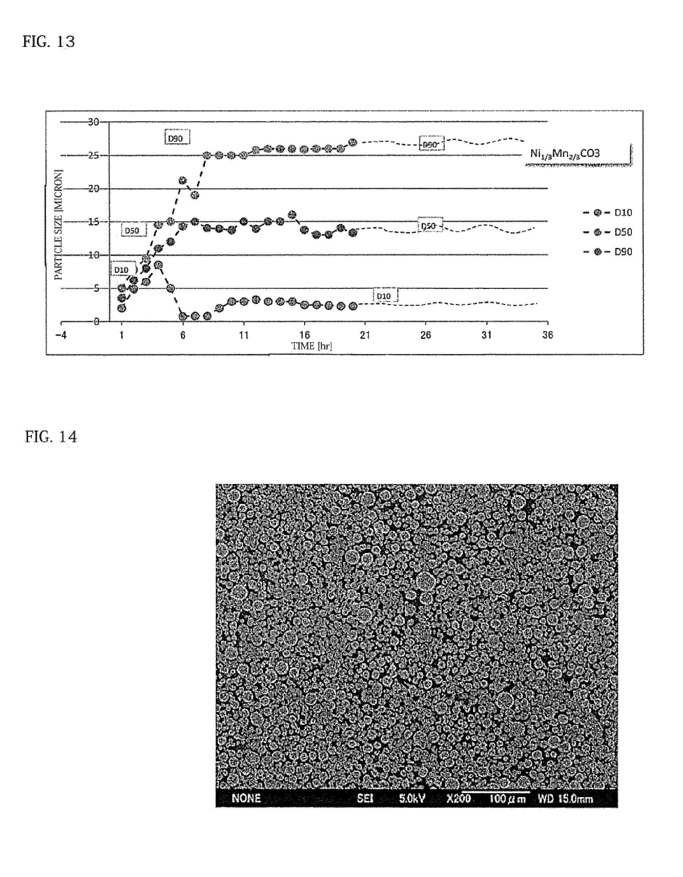

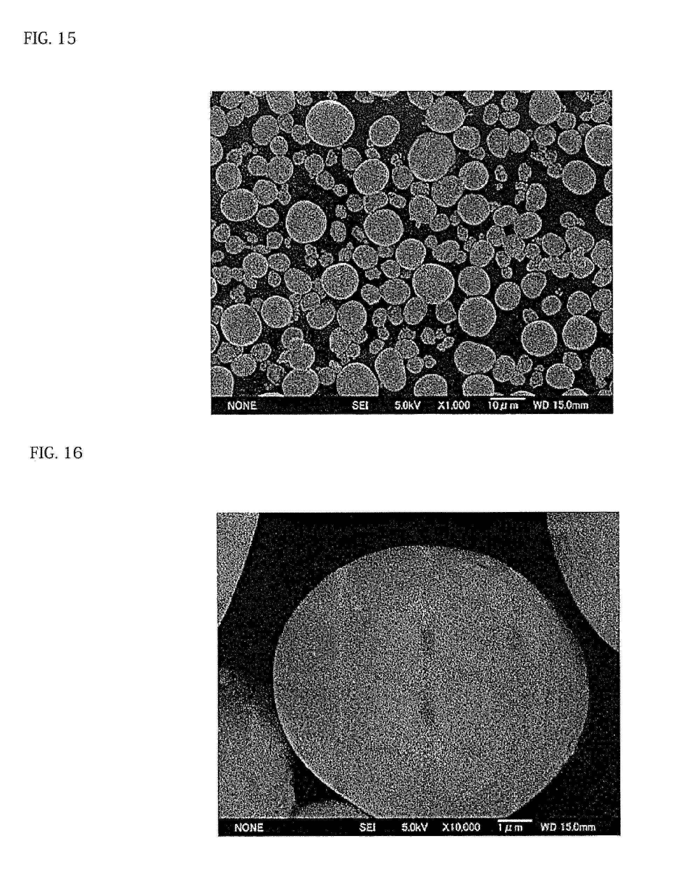

Variation results of the particle sizes obtained from the operation for 20 hours are shown in the graph of Fig. 13, and SEM photographs of the particles taken when the operation had been performed for 20 hours are shown in Figs. 14 to 16.

### <Discussion>

The particle sizes are small, and are stable with time.

### (Comparative Example 1) Example of nickel manganese carbonate

Nickel manganese carbonate particles were obtained in the typical stirred reactor with the draft tube as illustrated in Fig. 1.

As the reactant A, 1.6 M liquid obtained such that nickel sulfate and manganese sulfate are mixed at a ratio of 1 : 2 was used.

As the reactant B, ammonium bicarbonate of 15% concentration, and as the reactant C, ammonia water of 25% concentration were used.

The stirring machine was operated with a speed of rotation of 2000 rpm. About 25 g/min of reactant A, about 18 g/min of the reactant B, and about 2 g/min of the reactant C were injected around the rotor of the stirred reactor. 100 ml/min of CO2 gas was injected into the lower portion of the stirred reactor. The device system was operated with about 3 L of the capacity.

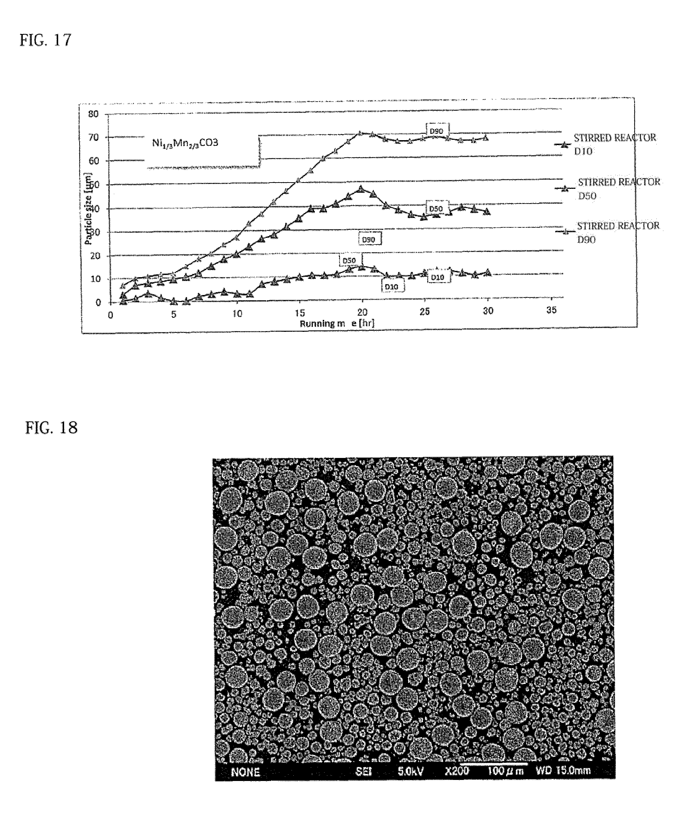

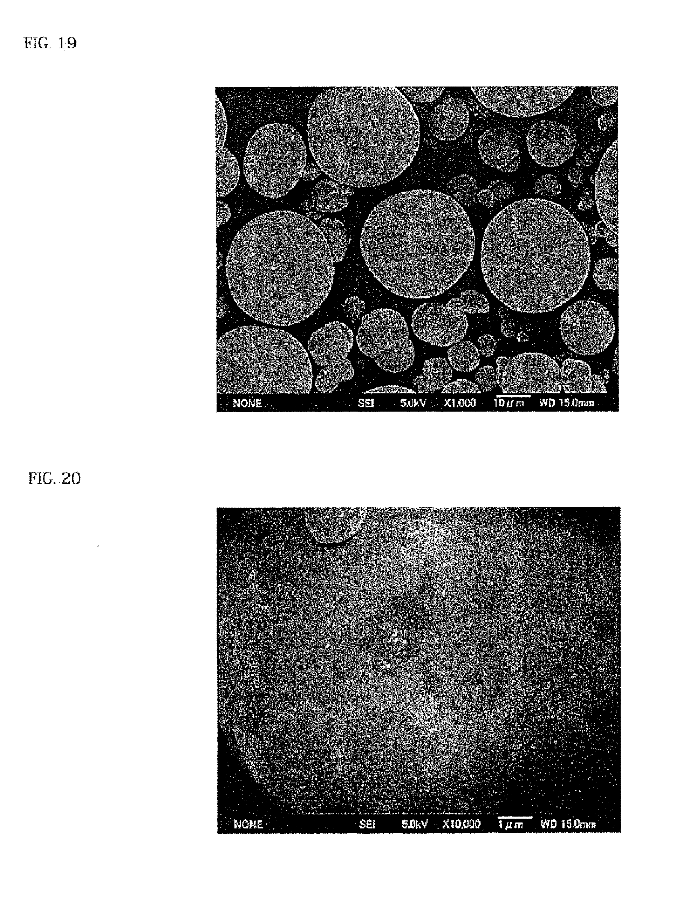

Variation results of the particle sizes obtained from the operation for 24 hours are shown in the graph of Fig. 17, and SEM photographs of the particles taken when the operation had been performed for 6 hours are illustrated in Figs. 18 to 20.

### <Discussion>

The particle sizes are large, and are unstable with time.

### (Example 2) Example of nickel manganese hydroxide

The configuration of device is the same as that of Example 1. That is, an experiment was performed with the device configured so as to include the enhancement path 32.

As the reactant A, 1.6 M liquid obtained such that nickel sulfate and manganese sulfate are mixed at a ratio of 1 : 2 was used. As the reactant B, ammonium bicarbonate of 15% concentration, and as the reactant C, ammonia water of 25% concentration were used. To advance predetermined reaction, it is common that solvent adjustment is performed to the reactant A by addition of ammonium sulfate, hydrogen peroxide water, ethanol, glycerin, or the like and in this example, 0.1 M of ammonium sulfate was added. The reactant A and the reactant C were injected into the preceding stage of the circulation pump 24.

The reactant B was injected into the enhancement path 32 at the subsequent stage of the circulation pump 24.

A start mother liquor prepared such that 300 g of ammonia water is added to 6 kg of ion exchange water was used.

A circulation pump 24 was operated at 20 L/min, about 92 g/min of the reactant A, about 36 g/min of the reactant B, and about 3 g/min of the reactant C were injected. Further, to the path provided from the processing vessel 10 to the transfer pump 24, 100 ml/min of CO2 gas was injected before the circulation pump 24 or at the outlet side of the circulation pump 24 (N2 gas may alternatively be used).

The device system was operated where the capacity of the device system is 6.5 L. The same amount of product liquid as that of an injected reactant was discharged by a pump below the processing vessel 10.

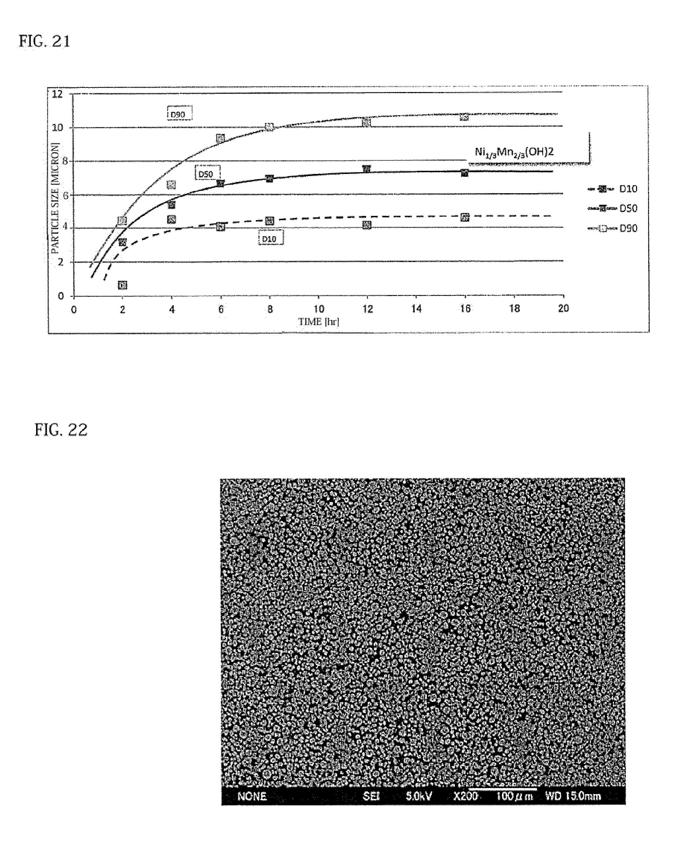

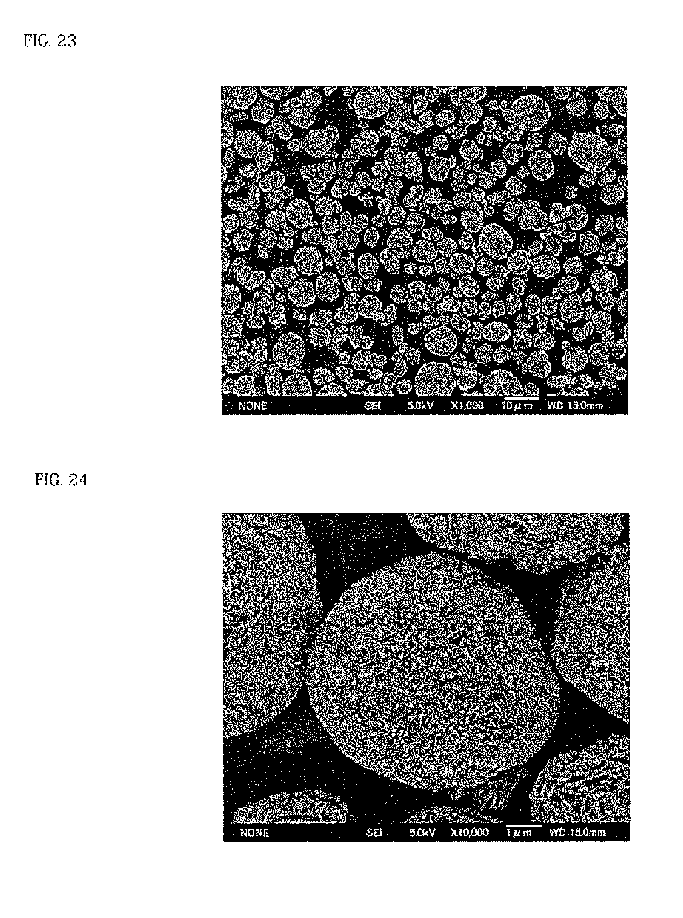

Variation results of the particle sizes obtained from the operation for 20 hours are shown in the graph of Fig. 21, and SEM photographs of the particles taken when the operation had been performed for 20 hours are shown in Figs. 22 to 24.

### <Discussion>

The particle sizes are small, and are stable with time.

### (Comparative Example 2) Example of nickel manganese hydroxide

Nickel manganese hydroxide particles were obtained in the typical stirred reactor with the draft tube as illustrated in Fig. 1.

As the reactant A, 1.6 M liquid obtained such that nickel sulfate, manganese sulfate and cobalt sulfate are mixed at a ratio of 1 : 1 : 1 was used.

As the reactant B, sodium hydroxide of 25% concentration, and as the reactant C, ammonia water of 25% concentration were used.

The stirring machine was operated with a speed of rotation of 2000 rpm. About 10.5 g/min of reactant A, about 4.2 g/min of the reactant B, and about 0.6 g/min of the reactant C were injected around the rotor of the stirred reactor. 100 ml/min of CO2 gas was injected into the lower portion of the stirred reactor. The device system was operated with about 3 L of the capacity.

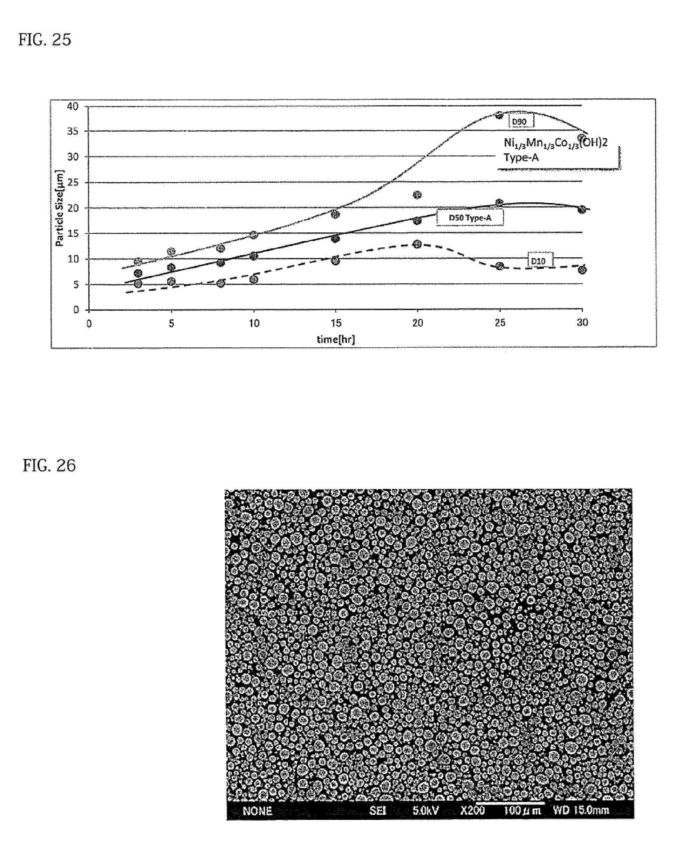

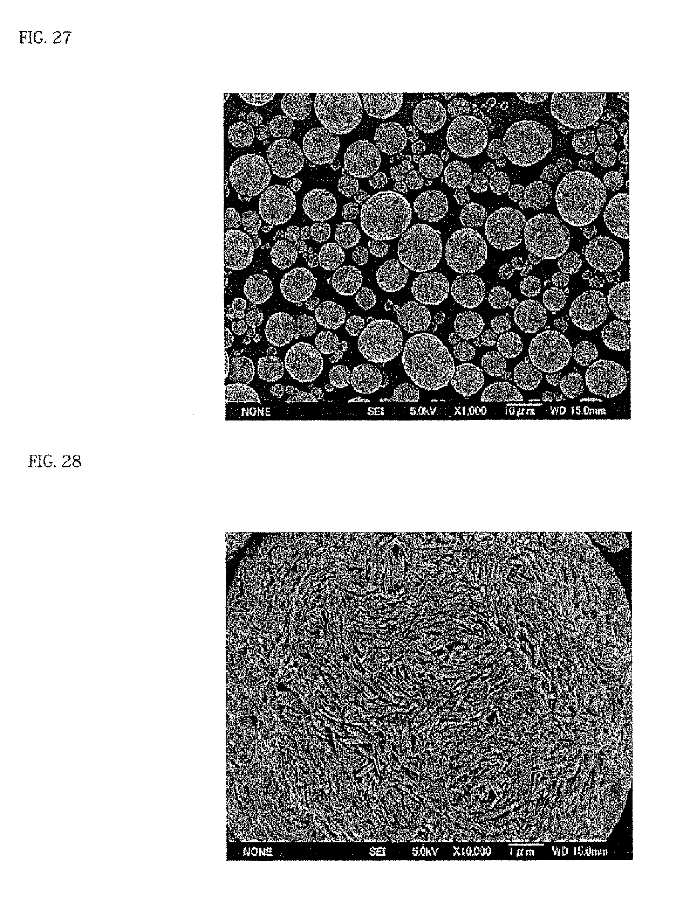

Variation results of the particle sizes obtained from the operation for 30 hours are shown in the graph of Fig. 25, and SEM photographs of the particles taken when the operation had been performed for 15 hours are illustrated in Figs. 26 to 28.

### <Discussion>

The particle sizes are large, and are unstable with time.

### (Reference Example)

In this example, nickel manganese hydroxide was manufactured with the typical stirred reactor shown in Fig. 1.

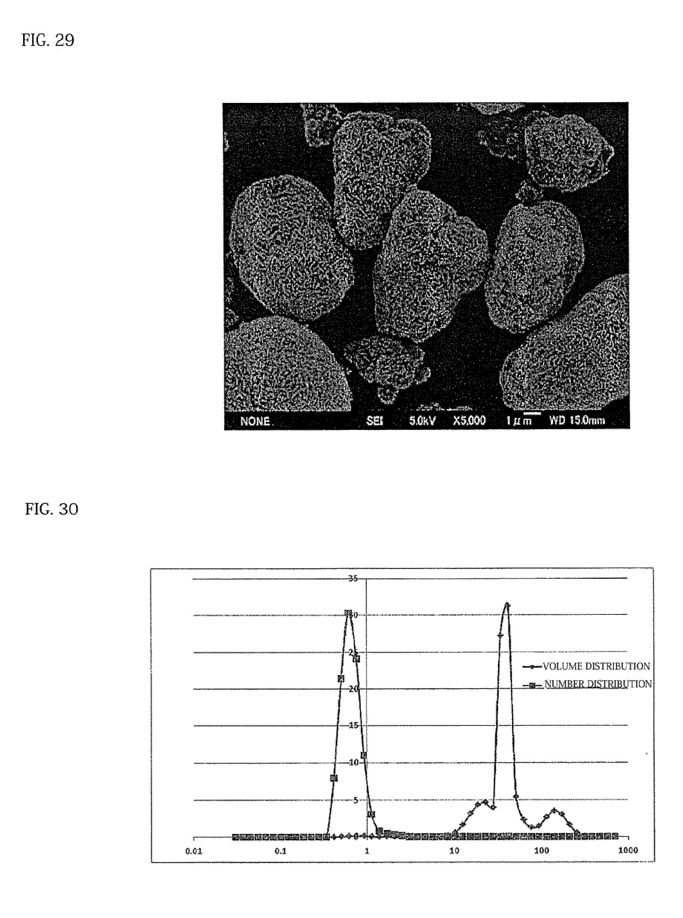

While the manufacturing was performed with the same chemical liquid composition as Example 2, the particle shape is deformed from a spherical shape, as illustrated in Fig. 29.

### (Comparative Example 3) Example of nickel manganese carbonate

As shown in Fig. 30, in this example, nickel manganese carbonate was manufactured with the typical stirred reactor illustrated in Fig. 1. The particle size distribution is broad.

### (Example 3) Example of nickel manganese carbonate

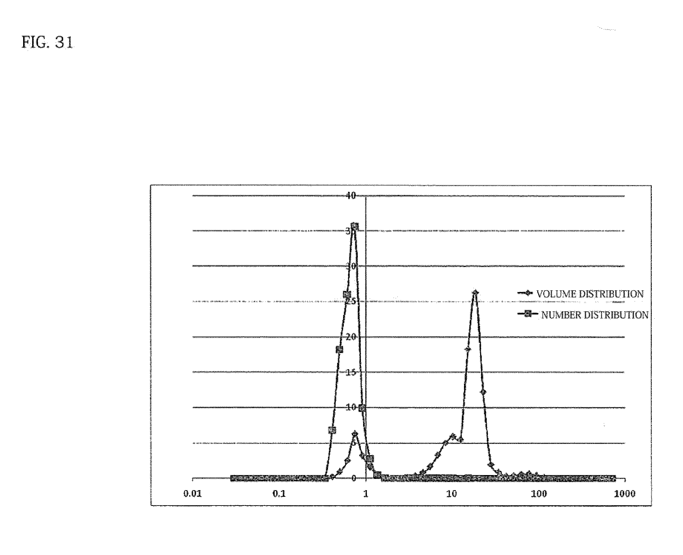

As shown in Fig. 31, in this example, nickel manganese carbonate was manufactured according to the example of the present invention including the external circulation paths. The manufacturing was performed with the same chemical liquid composition as Example 2.

The particle sizes are smaller and the particle size distribution is sharper than the case of Fig. 30 resulted from Comparative example 3.

### Industrial Applicability

The present invention can be applied to various types of use, in addition to the use for a lithium ion battery cathode active material.

### Reference Signs List

- 10: Processing vessel
- 12: Extraction port for product liquid
- 20, 22, 26, and 28: External circulation path
- 24: Circulation pump
- 30, 34: Liquid concentrate injection passage
- 32: Enhancement path
- A: Second liquid concentrate
- B: First liquid concentrate

## Claims

1. A method of manufacturing metal agglomerate comprising:
allowing, by a circulation unit, a flow of a liquid containing metal to pass through a processing vessel and an external circulation path, and a part of the liquid from the processing vessel to be extracted to an outside in a substantially continuous manner so as to return to the processing vessel after it goes through the external circulation path,
setting a flow velocity in the external circulation path to be 1 m/second or more, and
injecting at least a part of a liquid concentrate containing a reactant to be newly added into the external circulation path.

2. The method of manufacturing metal agglomerate according to claim 1, wherein an extraction portion of the liquid from the processing vessel to the external circulation path and an extraction portion of a product liquid are located in different positions.

3. The method of manufacturing metal agglomerate according to claim 2, wherein the product liquid is discharged from the processing vessel at a portion lower than the extraction portion of the liquid from the processing vessel to the external circulation path.

4. The method of manufacturing metal agglomerate according to claim 1, wherein the external circulation path includes a circulation pump.

5. The method of manufacturing metal agglomerate according to claim 1, wherein a flow velocity control unit including a circulation pump is provided in the external circulation path.

6. The method of manufacturing metal agglomerate according to claim 1, wherein the liquid concentrate containing a reactant is added in the external circulation path at a subsequent stage of a circulation pump.

7. The method of manufacturing metal agglomerate according to claim 1, wherein a first liquid concentrate containing a reactant is injected into the external circulation path at a preceding stage of a circulation pump, and a second liquid concentrate containing a reactant is added in the external circulation path at a subsequent stage of the circulation pump.

8. The method of manufacturing metal agglomerate according to claim 1, wherein each of a first liquid concentrate containing a reactant and a second liquid concentrate containing a reactant is injected into the external circulation path at a subsequent path of a circulation pump.

9. The method of manufacturing metal agglomerate according to claim 1, wherein the external circulation path is branched into a plurality of branch paths at a subsequent stage of a circulation pump, and the liquid that has passed through the plurality of branch paths is sent to the processing vessel.

10. The method of manufacturing metal agglomerate according to claim 9, wherein outlets of the branch paths face a reaction processing liquid in the processing vessel while the plurality of branch paths are remained in a branch state.

11. The method of manufacturing metal agglomerate according to claim 1, wherein the external circulation path includes a circulation pump and an enhancement path is provided at a subsequent stage of the circulation pump.

12. The method of manufacturing metal agglomerate according to claim 1, wherein the external circulation path includes a circulation pump, and is branched into a plurality of branch paths at a subsequent stage of the circulation pump, an enhancement path is provided in at least one of the plurality of branch paths, and the liquid that has passed through the branch paths is sent to the processing vessel.

13. The method of manufacturing metal agglomerate according to claim 1, wherein a Reynolds number of the external circulation path is 5000 or more, and a reaction passage having an average flow velocity of 1 m/second or more is formed by 3 m or more.

14. The method of manufacturing metal agglomerate according to claim 1, wherein a mechanical unit that fluidizes a reaction liquid is not provided in the processing vessel, instead reaction is mainly performed in a circulation process of the external circulation path.

15. The method of manufacturing metal agglomerate according to claim 1, wherein a product liquid is discharged from the processing vessel to an outside.

16. The method of manufacturing metal agglomerate according to claim 15, wherein a mechanical unit that fluidizes the product liquid is provided in a vicinity of an exhaust port through which the product liquid is discharged from the processing vessel to the outside.

17. A method of manufacturing a lithium ion battery cathode active material, the method using metal agglomerate obtained by the manufacturing methods according to claims 1 to 16 for a lithium ion battery cathode active material.

18. A method of manufacturing a lithium ion battery containing a lithium ion battery cathode active material, the method using metal agglomerate obtained by the manufacturing methods according to claims 1 to 16.

19. A lithium ion battery containing a lithium ion battery cathode active material using metal agglomerate obtained by the manufacturing methods according to claims 1 to 16.
